# EUROPÄISCHE PATENTSCHRIFT

(11) **EP 1 650 486 B1**
(45) Veröffentlichungstag und Bekanntmachung des Hinweises auf die Patenterteilung: **27.07.2011**
(21) Anmeldenummer: 05018117.1
(22) Anmeldetag: 20.08.2005
(51) Int. Cl.: F16L 41/02, B29D 23/00

(54) **T-Stück**
T-piece
Pièce en T

(30) Priorität: 20.10.2004 DE 102004051200
(43) Veröffentlichungstag der Anmeldung: 26.04.2006
(73) Patentinhaber: Reinert - Ritz GmbH, 48531 Nordhorn (DE)
(72) Erfinder: Ritz, Michael, 48527 Nordhorn (DE)
(74) Vertreter: Ostriga, Sonnet, Wirths & Roche

(56) Entgegenhaltungen:
- CH-A- 399 845
- DE-A1- 2 412 726
- DE-B3- 10 259 143
- DE-C1- 3 404 294

## Beschreibung

Die Erfindung betrifft ein T-Stück aus Kunststoff zum Anschluss eines abgehenden Rohres an eine Rohrleitung, wobei das T-Stück zwei in Flucht liegende erste und zweite Rohrstutzen aufweist, die von einer zentralen Verstärkung ausgehen, an der ein dritter Rohrstutzen mit zu den ersten und zweiten Rohrstutzen quer verlaufender Orientierung angeordnet ist

T-Stücke aus Kunststoff werden zur Erzeugung von Rohrabgängen in Rohrleitungen zum Transport von Fluiden wie z.B. Gas oder Wasser eingesetzt. Nach DIN 16962/63 sind solche T-Stücke aus Polyethylen (PE) oder Polypropylen (PP) gefertigt.

Im Anschlussbereich des abgehenden Rohres, also im Zentrum des T-Stücks, müssen die Wandungen wegen der auftretenden Innendruckverhältnisse verstärkt sein. Bekannt sind im wesentlichen folgende wichtige Herstellungsverfahren für T-Stücke aus Kunststoff.

Bei dem ersten Verfahren wird ein komplettes T-Stück im Spritzgießverfahren erzeugt Dies ist wegen der kostspieligen Spritzgießwerkzeuge ein relativ aufwendiges Verfahren, das sich auch nur für T-Stücke eignet, die gewisse Dimensionen nicht überschreiten.

Das zweite Verfahren ist z.B. aus DE 34 04 294 C1 bekannt. Bei der Herstellung von Rohrformstücken aus einem thermoplastischen Kunststoff wird ein zuvor auf Länge geschnittener extrudierter Rohrkörper über einen wesentlichen Teil seiner Länge durch mehrlagiges Umwickeln mit extrudiertem Bandmaterial aus thermoplastischem Kunststoff unter Ausbildung eines im wesentlichen zylindrischen Kragens radial nach außen verstärkt. Das Bandmaterial wird beim Umwickeln des Rohrkörpers erhitzt, um die Lagen des Bandmaterials sowohl mit dem Rohrkörper als auch untereinander fest zu verschweißen. Nach Fertigstellung des Kragens an dem Rohrkörper werden im Kragen nach Erkalten des Bandmaterials Abzweigbohrungen quer bzw. winklig zur Achse des Rohrkörpers hergestellt und der Kragen außerdem spanend bearbeitet, wobei der Kragen an jedem seiner beiden axialen Enden unter Bildung einer Hohlkehle stirnseitig abgedreht wird.

Vor der Herstellung der Abzweigbohrungen wird der Kragen zunächst im Bereich des herzustellenden Anschlussstutzens parallel zur Achse des Rohrkörpers und im Bereich an der gegenüberliegenden Seite winklig zur Rohrachse flach abgedreht. Anschließend wird an dem Kragen jeweils rings um die Abzweigbohrungen der im wesentlichen zylindrische Anschlussstutzen hergestellt. Der Querschnitt jedes der angedrehten Anschlussstutzen entspricht dabei dem Querschnitt eines abgehenden Rohrstranges, so dass diese Rohrstränge durch einfaches Stumpfschweißen mit dem Rohrformstück fest und dauerhaft verbunden werden können.

DE 24 12 726 lehrt, ein konzentrisch stranggepresstes Rohr mittels eines der Strangpressdruse nachgeördneten, temperaturgesteuerten Kalibrierkopfes formgebend zu bearbeiten. So lassen sich Rohrreduzier- und Rohrverbindungsstücke oder Rohrarmaturen herstellen.

Bei einem vierten Verfahren wird ein Hohlstab spanabhebend bearbeitet. Ausgangsmaterial für das T-Stück ist ein Hohlstab aus PE bzw. PP. Zur Bildung des ersten Rohrstutzens und des zweiten, mit diesem in Flucht der Rohrleitung liegenden Rohrstutzens wird der Außenmantel des Hohlstabs an den beiden Enden abgedreht und es werden dadurch jeweils ringförmige Werkstoffbereiche entfernt. Es entsteht somit zunächst ein Rotationskörper mit einer im mittleren Bereich verdickten bzw. verstärkten Außenkontur. An der Seite, an der das abzweigende Rohr anzubringen ist, wird eine ebene, zur Längsachse der Rohrleitung parallele Abfräsung vorgenommen, mit der ein weiterer Werkstoffbereich entfernt wird. Anschließend wird im Zentrum dieser Abfräsung die Wand durchbohrt, wodurch eine kreisrunde Anschluäsöffnung entsteht, dessen Mittelpunkt in der Mittellinie des abgehenden Rohres liegt. Ein abschließendes Überfräsen des oben über den Mantel der Rohrstutzen überstehenden Materials führt schließlich zu einem sehr kurzen dritten Rohrstutzen.

Einzelheiten dieser Fertigungsart sind in DE 102 59 143 B3 der Anmelderin unter Bezugnahme auf die dortige Fig. 4 ausführlich erörtert. Insoweit wird auf die DE 102 59 143 B3, von der vorliegende Erfindung ausgeht, Bezug genommen.

Solchermaßen hergestellte T-Stücke lassen sich relativ kostengünstig auch in größeren Dimensionen erzeugen und haben sich in der Praxis sehr bewährt. Dauerfestigkeitsprüfungen haben indes gezeigt, dass insbesondere im Bereich des Anschlusses des dritten Rohrstücks nach vielen Jahren Dauerbetriebs bei einer unter Innendruck stehenden Fluidleitung möglicherweise mit Ausbeulungen zu rechnen ist, was letztlich zu einer Beschädigung des T-Stücks bis hin zur Zerstörung führen könnte.

Aufgabe der Erfindung gemäß DE 102 59 143 B3 ist es, ein T-Stück so zu gestalten, dass diese drohende Gefahr vermieden wird, wobei es des weiteren wesentlich darauf ankommt, nicht mehr Kunststoffmaterial verwenden oder auf erhöhte Wandstärken zurückgreifen zu müssen. DE 102 59 143 B3 löst dieses Problem dadurch, dass der Übergangsbereich zwischen dem dritten Rohrstutzen und dem daran angeschweißten Rohrstück von einem Verstärkungsring umfasst ist, der den Rohrstutzen und einen daran anschließenden axialen Bereich des Verbindungs-Rohrstücks außenmantelseitig eng umschließt.

Zur Verwirklichung der der DE 102 59 143 B3 zugrundeliegenden Erfindung bedarf es demnach lediglich des auf das Rohrstück aufgeschobenen und den Schweiß-Verbindungsbereich eng umschließenden Verstärkungsringes.

Das Ziel vorliegender Erfindung besteht nun darin, ein T-Stück vorzuschlagen, das einerseits einen solchen Verstärkungsring nicht benötigt und andererseits durch einen minimalen Werkstoffbedarf gekennzeichnet ist, wobei das T-Stück auf relativ einfache Weise herstellbar sein soll.

Die vorliegende Erfindung löst diese Aufgabe mit den Merkmalen des unabhängigen Anspruchs 1 dadurch, dass
- ein Profilstrang (16) im Strangpressverfahren erstellt wird,
- der Profilstrang (16) im Wesentlichen die Form eines Rohres aufweist, wobei der Profilstrang (16) unterhalb seiner Quermittelebene (M) fast exakt ein Halbrohr darstellt, und nur oberhalb seiner Quermittelebenel (M) derart mit Formmasse angereichert ist, dass er einen Quader aufweist,
- vom Profilstrang (16) ein Kürzungsabschnitt gewonnen wird,
- ein Materialabtrag lediglich an den Stirnseiten zur Ausbildung des ersten und zweiten Rohstutzens (11, 12) sowie für die abzweigende Formung des dritten Rohrstutzens (13) im Bereich des Quaders erfolgt.

Der Profilstrang ist dabei bevorzugt im kontinuierlichen Strang-Pressverfahren erzeugt. Dies im Unterschied zu der für das Extrudieren von Rohren gängigen Fertigungsmethode der Vakuum-Extrusion. Bei ihr besteht der hier nicht gewünschte Effekt der Materialanhäufung im unteren Rohrbereich durch Absacken des Materials, was durch Vergrößerung der Rohr-Wandstärke Material im Sinne einer Verstärkung erzeugt, die aber nur schwer kontrollierbar und kaum für die Fertigung von T-Stücken der hier in Rede stehenden Art geeignet ist.

Des weiteren sieht die Erfindung vor, dass die Mantelfläche des T-Stücks - abgesehen von der in der Querschnittsebene des dritten Rohrstutzens liegenden Fläche - der unbearbeiteten Mantelfläche des Profilstrangs entspricht. Das bedeutet, dass gemäß der Erfindung die gewünschte Verstärkung - und nur diese und auch nur dort, wo sie tatsächlich benötigt wird - erzeugt wird. Daraus resultieren erhebliche Vorteile insoweit, als einerseits zur Konfektionierung des T-Stücks außerordentlich wenig Material von dem Ausgangs-Profilstrang abzutragen ist. Andererseits bedürfen wesentliche Partien, nämlich der größte Anteil der Profilstrang-Oberfläche, keinerlei weiterer Bearbeitung.

Bevorzugt ist des weiteren der Umriss des Profilstrangs im Querschnitt im wesentlichen von einem Halbkreisbogen und daran anschließenden Seiten eines Rechtecks gebildet, die mittels einer in einer Querschnittsebene des dritten Rohrstutzens liegenden Linie verbunden sind.

Wesentlich für die Erfindung ist es ferner, dass das T-Stück aus dem Profilstrang allein durch Spanen der Rohrstutzen gebildet sein kann. Dabei kommt es insbesondere in Betracht, das T-Stück aus dem Profilstrang durch Andrehen des ersten und des zweiten Rohrstutzens sowie Fräsen bzw. Überdrehen der Normalebene zur Bildung des dritten Rohrstutzens zu erzeugen.

Die Erfindung versteht sich im übrigen am besten anhand der nachfolgenden Beschreibung eines in den Zeichnungen dargestellten Ausführungsbeispiels. In den Zeichnungen zeigen:

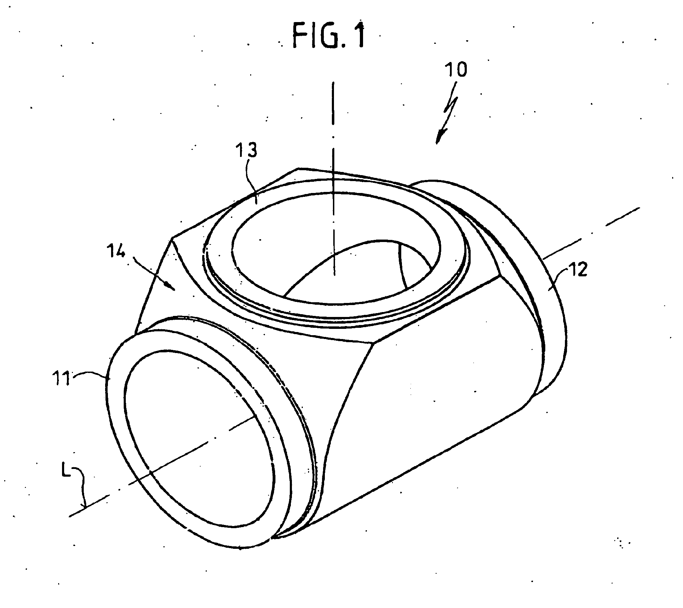

- Fig. 1: ein der Erfindung entsprechendes T-Stück in perspektivi- scher Ansicht,
- Fig. 2: einen Längsschnitt durch das T-Stück der Fig. 1 entspre- chend der Schnittangabe A-A in Fig. 3,
- Fig. 3: eine Stirnansicht des T-Stücks,
- Fig. 4: eine perspektivische Ansicht des Ausgangsmaterials zur Erzeugung des T-Stücks und
- Fig. 5: eine Stirnansicht des Ausgangsmaterials.

Das in den Fig. gezeigte T-Stück 10 aus Kunststoff umfasst einen ersten Rohrstutzen 11, einen zweiten, diametral gegenüber vor gesehenen Rohrstutzen 12 sowie einen dritten Rohrstutzen 13, der quer, insbesondere senkrecht, zur Längsachse L des T-Stücks bzw. der zugehörigen Rohrleitung verläuft. Die Rohrstutzen 11, 12 und 13 haben eine nur geringe Länge. Z.B. sind die Rohrstutzen 11 und 12 ca. 50 mm und der Rohrstutzen 13 ca. 20 mm lang.

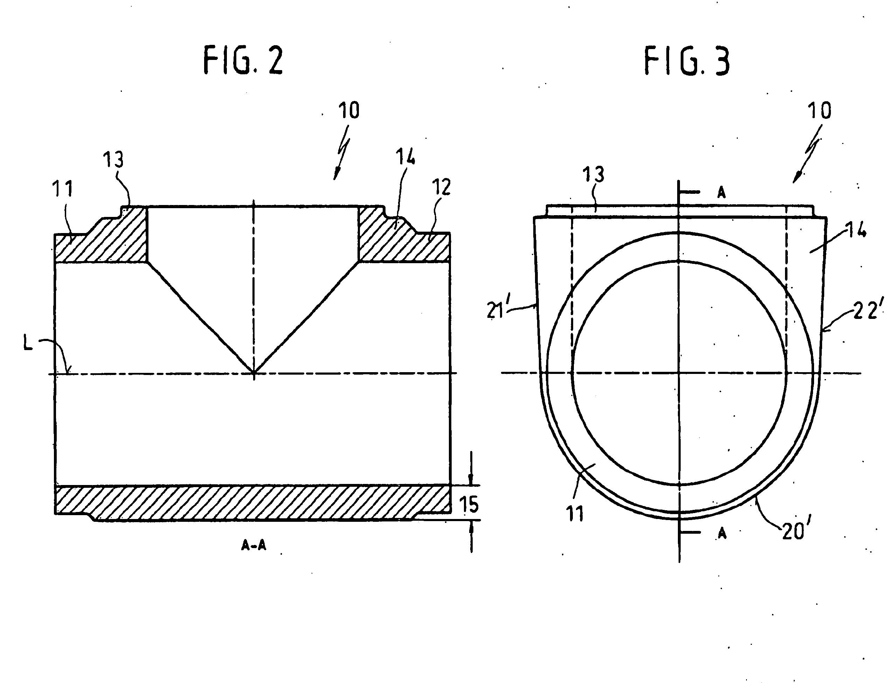

Wesentlich für aus Kunststoff bestehende T-Stücke 10 ist eine in den Fig. mit 14 bezeichnete Verstärkung im Anschlussbereich der abzweigenden Rohrleitung. Diese Verstärkung 14 ist als beträchtliche Materialanhäufung gegenüber der normalen Rohrwandstärke 15 (Fig. 2) zu verstehen.

Die Erfindung geht von der Erkenntnis aus, dass eine derartige Verstärkung 14 nur im Abzweigungsbereich des Rohrstutzens 13 benötigt wird und macht sich diese Erkenntnis wie folgt zunutze:

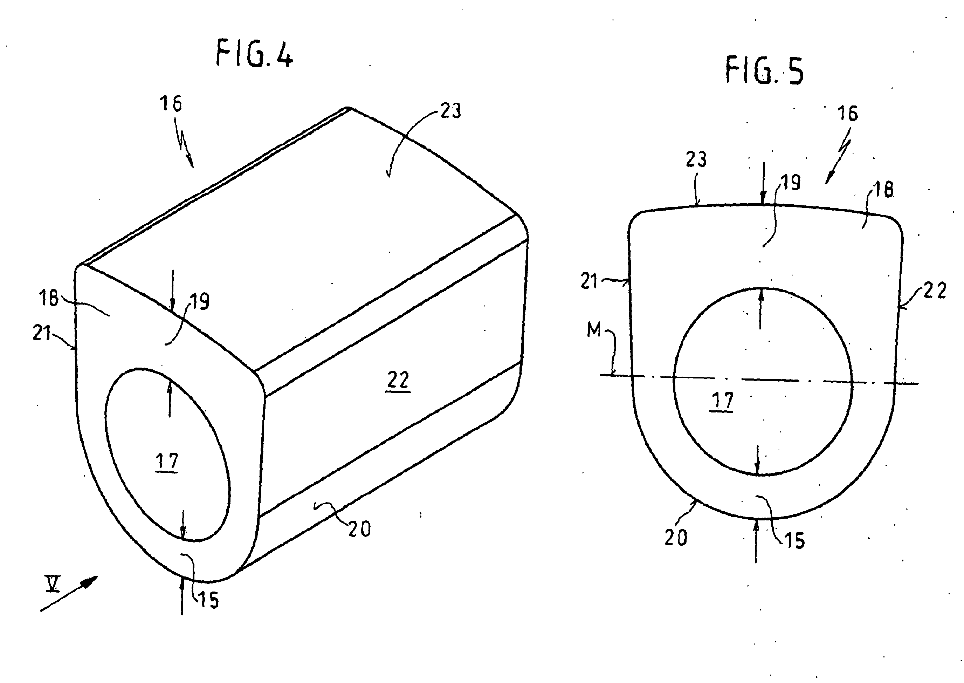

Ausgangsmaterial für das T-Stück 10 bildet ein in den Fig. 4 und 5 gezeigter Profilstrang 16, der im Wege des Strangpressens mittels eines Profilwerkzeugs hergestellt wird. Genau betrachtet handelt es sich bei dem Profilstrang 16 um einen Kürzungsabschnitt eines sehr langen, gepressten Stranges.

Wie die Fig. 4 und 5 deutlich zeigen, liegt der Rohrquerschnitt 17 konzentrisch zur Mantelfläche 20 und wird auch entsprechend stranggepresst. In der Zeichnung oberhalb des Rohrquerschnitts 17 befindet sich die erwähnte Verstärkung 14 als "Formmassen-Anreicherung" 18. Wesentlich ist, dass die Wandstärke 19 des Profilstrangs 16 in diesem Bereich deutlich größer ist als die Rohrwandstärke 15.

Wesentlich ist ferner, dass der Profilstrang 16 nur in einem Teilbereich seines Umfangs derart mit Formmasse angereichert ist, und zwar beim Ausführungsbeispiel nur oberhalb der Quermittelebene M des T-Stücks 10. Unterhalb der Quermittelebene M stellt der Profilstrang 16 fast exakt ein Halbrohr dar, oberhalb im wesentlichen einen innen mit Halbbohrung versehenen Quader. Anders ausgedrückt ist der Umriss des Profilstrangs 14 im Querschnitt im wesentlichen von einem Halbkreisbogen 20 und daran anschließenden Seiten 21, 22 eines Rechtecks gebildet, die mittels einer in einer Querschnittsebene des späteren dritten Rohrstutzens 13 liegenden dritten Rechteckseite 23 verbunden sind. Beim Ausbildungsbeispiel ist das Rechteck, wie aus Fig. 5 erkennbar, ein leicht trapezoides.

Eine aus einem Vergleich der Fig. 3 und 5 erkennbare wesentliche Besonderheit des erfindungsgemäßen T-Stücks 10 besteht darin, dass sich die Flächenbereiche 20 vollkommen und 21 sowie 22 (Fig. 5) zum überwiegenden Teil praktisch unverändert und unbehandelt als Mantelflächen 20', 21' und 22' (Fig. 3) am fertigen T-Stück 10 wiederfinden.

Von diesen Oberflächenbereichen ist also keinerlei Material abzutragen. Ein Materialabtrag erfolgt lediglich an den Stirnseiten zur Ausbildung der Rohrstutzen 11 und 12 sowie für die abzweigende Rohreitung zur Formung des dritten Rohrstutzens 13.

Ein Profilstrang (16) der beschriebenen erfindungsgemäßen Art hat im Unterschied zu einem sog. Hohlstab (Rohr) mit exzentrischem Rohrkanal - zusätzlich zu Fertigungsvorteilen - den erheblichen Vorzug einer beachtlichen Einsparung an zu zerspanendem Material, da der Profilstrang selbst bereits der wesentliche Teil des fertigen T-Stücks ist.

## Patentansprüche

1. Verfahren zur Herstellung eines T-Stücks (10) aus Kunststoff zum Anschluss eines abgehenden Rohres an eine Rohrleitung, **dadurch gekennzeichnet, dass**
- ein Profilstrang (16) im Strangpressverfahren erstellt wird,
- der Profilstrang (16) im Wesentlichen die Form eines Rohres aufweist, wobei der Profilstrang (16) unterhalb seiner Quermittelebene (M) fast exakt ein Halbrohr darstellt, und nur oberhalb seiner Quermittelebene (M) derart mit Formmasse angereichert ist, dass er einen mit Halbbohrung versehenen Quader auweist,
- vom Profilstrang (16) ein Kürzungsabschnitt gewonnen wird,
- ein Materialabtrag lediglich an den Stirnseiten zur Ausbildung des ersten und zweiten Rohstutzens (11, 12) sowie für die abzweigende Formung des dritten Rohrstutzens (13) im Bereich des Quaders erfolgt.

2. Verfahren zur Herstellung eines T-Stücks nach Anspruch 1, **dadurch gekennzeichnet, dass** die Mantelfläche des T-Stücks (10) - abgesehen von der in der Querschnittsebene des dritten Rohrstutzens (13) liegenden Fläche (23) - der unbearbeiteten Mantelfläche des Profilstrangs (16) entspricht.

3. Verfahren zur Herstellung eines T-Stücks nach Anspruche 1 oder 2, **dadurch gekennzeichnet, dass** der Umriss des Profilstrangs (16) im Querschnitt im wesentlichen von einem Halbkreisbogen (20) und daran anschließenden Seiten (21; 22) eines Rechtecks gebildet ist, die mittels einer in einer Querschnittsebene des dritten Rohrstutzens (13) liegenden Linie (23) verbunden sind.

4. Verfahren zur Herstellung T-Stücks nach einem der vorhergehenden Ansprüche, **dadurch gekennzeichnet, dass** das T-Stück (10) aus dem Profilstrang (16) allein durch Spanen der Rohrstutzen (11, 12, 13) gebildet ist.

5. Verfahren zur Herstellung eines T-Stücks nach Anspruch 4, **dadurch gekennzeichnet, dass** das T-Stück (10) aus dem Profilstrang (16) durch Andrehen des ersten und des zweiten Rohrstutzens (11; 12) sowie Fräsen bzw. Überdrehen der Normalebene (23) zur Bildung des dritten Rohrstutzens (13) gebildet ist.

## Claims

1. Method for producing a T-piece (10) of plastics material for connecting an outgoing pipe to a pipeline, **characterised in that**
- an extruded profile (16) is produced in an extrusion process,
- the extruded profile (16) essentially has the shape of a pipe, wherein the extruded profile (16) represents almost exactly a half-pipe below its transverse centre plane (M), and is only enriched with moulding compound above its transverse centre plane (M) such that it comprises a cuboid provided internally with a half-bore,
- a reduction portion is obtained from the extruded profile (16),
- material is only removed at the front sides to form the first and second pipe connection (11, 12) as well as for the branching shaping of the third pipe connection (13) in the region of the cuboid.

2. Method for producing a T-piece according to Claim 1, **characterised in that** the circumferential surface of the T-piece (10) - with the exception of the surface (23) lying in the cross-sectional plane of the third pipe connection (13) - corresponds to the non-machined circumferential surface of the extruded profile (16).

3. Method for producing a T-piece according to Claim 1 or 2, **characterised in that** the contour of the extruded profile (16) in cross section is essentially formed by a semicircular arc (20) and adjoining sides (21; 22) of a rectangle which are connected by means of a line (23) lying in a cross-sectional plane of the third pipe connection (13) .

4. Method for producing a T-piece according to any one of the preceding Claims, **characterised in that** the T-piece (10) is formed from the extruded profile (16) solely by removing material from the pipe connections (11, 12, 13).

5. Method for producing a T-piece according to Claim 4, **characterised in that** the T-piece is formed from the extruded profile (16) by turning the first and the second pipe connection (11; 12) as well as milling or finish-turning the normal plane (23) to form the third pipe connection (13).

## Revendications

1. Procédé de fabrication d'une pièce en T (10) en matière synthétique, pour le raccordement d'un tube de départ à une tuyauterie, **caractérisé en ce que** :
- un tronçon profilé (16) est produit par un procédé d'extrusion,
- le tronçon profilé (16) présente sensiblement la forme d'un tube, le tronçon profilé (16) constituant au-dessous de son plan médian transversal (M) presque exactement un demi-tube et n'étant enrichi d'une masse profilée qu'au-dessus de son plan médian transversal (M), de manière à présenter une forme de bloc parallélépipédique,
- un tronçon de raccourcissement est obtenu à partir du tronçon profilé (16),
- un enlèvement de matériau est effectué uniquement au niveau des faces frontales, pour constituer les première et deuxième tubulures (11, 12), ainsi que pour le formage en départ en ramification de la troisième tubulure (13) dans la zone du bloc parallélépipédique.

2. Procédé de fabrication d'une pièce en T selon la revendication 1, **caractérisé en ce que** la surface d'enveloppe de la pièce en T (10) correspond - abstraction faite de la face (23) située dans le plan de section transversale de la troisième tubulure (13) - à la surface d'enveloppe non usinée du tronçon profilé (16).

3. Procédé de fabrication d'une pièce en T selon la revendication 1 ou 2, **caractérisé en ce que** le profil du tronçon profilé (16), observé en coupe transversale, est formé essentiellement par un arc en demi-cercle (20) et des côtés (21 ; 22), s'y raccordant, d'un rectangle, reliés au moyen d'une ligne (23) située dans un plan de coupe transversale de la troisième tubulure (13).

4. Procédé de fabrication d'une pièce en T selon l'une quelconque des revendications précédentes, **caractérisé en ce que** la pièce en T (10) est formée à partir du tronçon profilé (16), uniquement par usinage, avec enlèvement de copeaux, des tubulures (11, 12, 13).

5. Procédé de fabrication d'une pièce en T selon la revendication 4, **caractérisé en ce que** la pièce en T (10) est formée à partir du tronçon profilé (16) par tournage de la première et de la deuxième tubulure (11 ; 12), ainsi que fraisage ou détourage du plan normal (23) pour former la troisième tubulure (13).
